# EUROPEAN PATENT SPECIFICATION

(11) **EP 4 199 648 B1**
(45) Date of publication and mention of the grant of the patent: **20.05.2026**
(21) Application number: 22212645.0
(22) Date of filing: 09.12.2022
(51) Int. Cl.: H05B 1/02, B60L 58/27, B60L 58/25

(54) **SOUND CONTROLLING METHOD AND DEVICE OF PULSE HEATING FOR POWER BATTERY AND ELECTRIC VEHICLE**
SCHALLSTEUERUNGSVERFAHREN UND -VORRICHTUNG ZUR IMPULSERWÄRMUNG FÜR EINE LEISTUNGSBATTERIE UND ELEKTROFAHRZEUG
PROCÉDÉ ET DISPOSITIF DE COMMANDE SONORE DE CHAUFFAGE PAR IMPULSIONS POUR BATTERIE D'ALIMENTATION ET VÉHICULE ÉLECTRIQUE

(30) Priority: 17.12.2021 CN 202111556432
(43) Date of publication of application: 21.06.2023
(73) Proprietor: Deepal Automobile Technology Co., Ltd., Chongqing 401133 (CN)
(72) Inventor: LIN, Yuting, Chongqing, 401133 (CN); CHEN, Yang, Chongqing, 401133 (CN); CHEN, Jian, Chongqing, 401133 (CN); XIANG, Yu, Chongqing, 401133 (CN); CHEN, Yang, Chongqing, 401133 (CN); YANG, Na, Chongqing, 401133 (CN); LV, Jiaming, Chongqing, 401133 (CN); YAN, Yao, Chongqing, 401133 (CN)
(74) Representative: 2K Patent Partnerschaft mbB

(56) References cited:
- CN-A- 113 206 324
- CN-A- 113 715 692
- US-A1- 2021 351 732

## Description

### TECHNICAL FIELD

The disclosure belongs to the technical field of a power battery charging, particularly to a sound controlling method and a device of pulse heating for power battery and an electric vehicle.

### BACKGROUND

In a low temperature environment, the charging and discharging of the power battery of an electric vehicle is limited. In order not to affect the use, it is necessary to heat the power battery to a suitable working temperature as soon as possible. Conventional power battery heating often adopts PTC heating technology, which not only has high cost and low heating efficiency, but also needs to enable the power battery to discharge at a low temperature, which will cause lithium deposition in the power battery and affect the duration life of the power battery. The pulse heating technology for power battery uses the motor IGBT(Insulated Gate Bipolar Transistor) to complete the power battery heating function, which has more advantages in terms of cost and heating efficiency: 1. no additional parts are required; 2. high-frequency charging and discharging currents are generated to avoid lithium deposition caused by directional migration of power battery ions; 3. it leads to a high heating efficiency, a large effective value of current, and a fast heating speed of power batteries.

During the process of the pulse heating, the filter capacitors, inductors, coils and other components in the motor system vibrate under the electromagnetic force of a large alternative current, unavoidable sound radiated through thin-walled parts such as motor housings and electrical control covers, which may be objectionable to users. The noise may be weakened by reducing the current, but it also affects the heating performance.

CN113715692 discloses a control system and a control method for pulse heating noise of a power battery of an electric automobile, whereby a user can set pulse heating time so as to change pulse heating frequency and finally change values of noise inside and outside the automobile generated by pulse heating. If the value of noise generated by pulse heating in the vehicle is too large, the user is prompted to reset the pulse heating time, and if the user does not reset the pulse heating time, music is played; in the pulse heating process, the user can set the pulse heating time again.

CN113206324 discloses a power battery heating noise optimization method comprising: selecting a basic fixed-frequency switching frequency for enabling an IGBT to output pulse current; selecting a frequency bandwidth enabling the amplitude of the pulse current output by the IGBT to be optimal; generating a random variable-frequency switching frequency based on the basic fixed-frequency switching frequency and the frequency bandwidth; outputting the random frequency conversion switching frequency to an IGBT, so the IGBT outputs pulse current according to the random frequency conversion switching frequency, pulse heating is carried out on the power battery, the heating rate of the power battery is the highest, and the noise sound pressure level and noise sharpness generated in the heating process of the power battery both meet preset noise optimization requirements.

US2021351732 discloses a method, comprising: applying one or more first current pulses to a motor using power from a battery to cause one or more second current pulses in the battery that heat the battery to a desired temperature while substantially maintaining zero torque in the motor.

### SUMMARY

The disclosure provides a sound controlling method and a device of pulse heating for power battery and an electric vehicle, which does not affect a heating performance and improves a sound by optimizing a control of the IGBT and present different styles of sound or music sequences. While satisfying a heating function of the power battery, it gives users a unique sensory experience.

The disclosure provides the sound controlling method of pulse heating for the power battery, the method includes:
obtaining a request value of a pulse heating current and a music to be played when turning on a pulse heating function of the power battery;
determining a target tune corresponding to the music to be played according to the request value of the pulse heating current;
determining a switching frequency of an IGBT corresponding to each note according to the target tune of the music to be played and each note of the music to be played;
determining a period corresponding to each switching frequency according to a beat duration corresponding to each note of the music to be played;
during each period, inputting the corresponding switching frequency and preset duty cycle to the IGBT, enabling the IGBT to output current, when a difference between a current value output by the IGBT and the request value of the pulse heating current exceeding a preset range, adjusting the duty cycle through controlling the IGBT, and enabling the current value of the IGBT to gradually approach the request value of the pulse heating current.

In an embodiment of the disclosure, the music to be played is randomly selected from a plurality of preset music or actively selected by a driver from the plurality of preset music.

In an embodiment of the disclosure, through a pre-stored switching frequency map, the switching frequency of the IGBT corresponding to each note is obtained from the switching frequency map;
multiple sets of data are recorded in the switching frequency map, and each set of data includes: a name of a piece of music, a tune of a piece of music, each note of a piece of music, and the switching frequency of the IGBT corresponding to each note.

In an embodiment of the disclosure, determining a target tune corresponding to the music to be played according to the request value of the pulse heating current includes:
first, through the switching frequency map, looking up the switching frequency map and obtaining multiple sets of values of the switch frequency under different tunes in the music to be played, a set of values of the switching frequency comprising a maximum value of the switching frequency and a minimum value of the switching frequency under a tune;
when the duty cycle of the IGBT is 100%, determining each set of values of the switching frequency corresponding to each group of current values, a group of current values comprising a maximum current value and a minimum current value under a tune;
determining one group of the current values as a group of the target current values when that a difference between the maximum current value in the group of the current values and the request value of the pulse heating current is within the preset range and the difference between the minimum current value in the group of the current values and the request value of the pulse heating current is within the preset range, and determining a tune corresponding to the group of the target current values as the target tune of the music to be played.

In an embodiment of the disclosure, under the same condition of the duty cycle of the IGBT, the higher the target tune of the music to be played, the lower the switching frequency of the IGBT corresponding to each note of the music to be played, and the greater the corresponding IGBT output the current value.

The disclosure further provides the sound controlling device of pulse heating for a power battery, including:
an acquisition module, configured to obtain the request value of the pulse heating current and the music to be played when turning on the pulse heating function of the power battery for the power battery;
a first determination module, configured to determine the target tune corresponding to the music to be played according to the request value of the pulse heating current;
a second determination module, configured to determine the switching frequency of the IGBT corresponding to each note according to the target tune of the music to be played and each note of the music to be played;
a third determination module, configured to determine the period corresponding to each switching frequency according to the beat duration corresponding to each note of the music to be played;
an adjustment module, configured to input the corresponding switching frequency and preset duty cycle to the IGBT during each period, enable the IGBT to output current, adjust the duty cycle through controlling the IGBT, and enable the current value of the IGBT to gradually approach the request value of the pulse heating current when a difference between a current value output by the IGBT and the request value of the pulse heating current exceeding a preset range.

The disclosure further provides an electric vehicle, including the sound controlling device of pulse heating for the power battery mentioned above.

The beneficial effects of the disclosure are:
when the power battery is heated by pulses, the switching frequency of the IGBT is output according to the notes of the music to be played, and the noise generated by the IGBT is presented in a form of music, so that the sound heard by the user is the sound of the music, which improves the user's experience.

### BRIEF DESCRIPTION OF THE DRAWINGS

FIG. 1 is a calibration process of a switching frequency map.
FIG. 2 is a schematic view of a controlling method in an embodiment of the disclosure.

### DETAILED DESCRIPTION

A three-phase IGBT of the alternative current motor may be controlled by a conventional SVPWM or DVPWM method, which does not affect a principle of sound generation, and will not be described here. A control of a single IGBT is taken as an example.

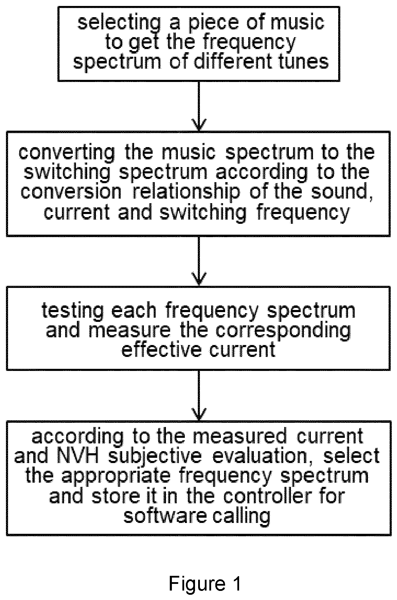

Please refer to FIG. 1. A switching frequency map in a motor controller is calibrated offline, an input of the switching frequency map is a beat signal of music, and an output is a switching frequency of an IGBT. When the switching frequency map is calibrated offline, a corresponding relationship between a sound frequency of the music and the switching frequency of the IGBT is established, which means that the music is translated into the switching frequency, stored in the motor controller, and called when a function is running. Wherein, a note in the music corresponds to a frequency value in the switching frequency map, and a pause symbol in the music corresponds to a shutdown(disconnect) command of the IGBT. The same piece of music may be set to different tunes. Lower tunes correspond to lower switching frequency of the IGBT and higher heating current of the IGBT. However, too low switching frequency is likely to cause lithium deposition in the power battery. During the offline calibration of the switching frequency map, an appropriate tune is selected according to a measured current output by the IGBT, a corresponding frequency or multiple tunes are stored, and then a follow-up process is handed over to a user to select (such as selecting a heating gear through a human-computer interaction interface, etc.). Under different switching frequencies, an amplitude of effective current of the pulse heating is different. In order to ensure a heating effect, it is also necessary to adjust a current output by the IGBT through a duty cycle of the IGBT.

After the above calibration, multiple sets of data are recorded in the obtained switching frequency map, and each set of data includes: a name of a piece of music, a tune of a piece of music, each note of a piece of music, and the switching frequency of the IGBT corresponding to each note.

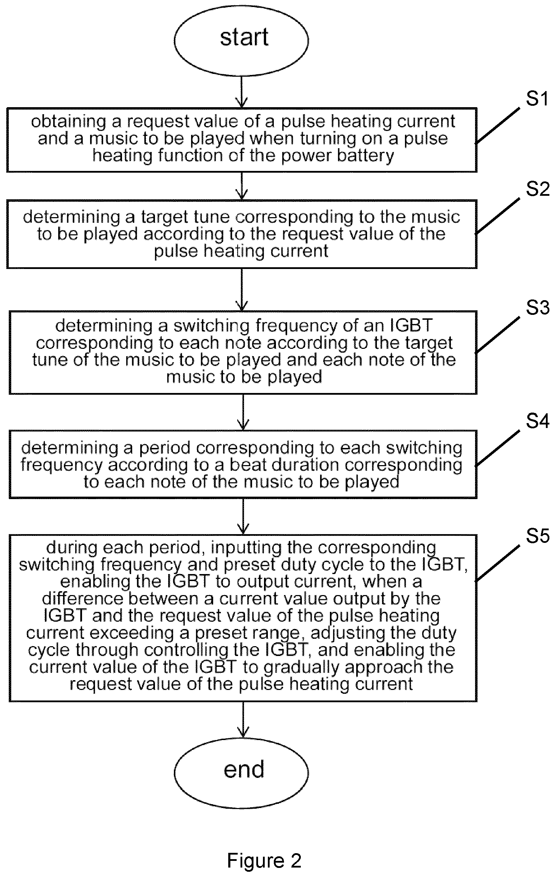

Please refer to FIG. 2. A sound controlling method of pulse heating for a power battery in an embodiment of the disclosure includes:
S1: obtaining a request value of a pulse heating current and a music to be played when turning on a pulse heating function of the power battery;
Wherein, the music to be played is randomly selected from a plurality of preset music or actively selected by a driver from the plurality of preset music;
S2: determining a target tune corresponding to the music to be played according to the request value of the pulse heating current;
The S2 includes:
   first, through the switching frequency map, looking up the map and obtaining multiple sets of values of the switch frequency under different tunes in the music to be played, a set of the values of the switching frequency comprising a maximum value of the switching frequency and a minimum value of the switching frequency under a tune;
   when the duty cycle of the IGBT is 100%, determining each set of the values of the switching frequency corresponding to each group of current values, each group of the current values comprising a maximum current value and a minimum current value under a tune;
   determining one group of the current values as a group of the target current values when that a difference between the maximum current value and the request value of the pulse heating current is within the preset range and a difference between the minimum current value and the request value of the pulse heating current is within the preset range, and determining a tune corresponding to the group of the target current values as the target tune of the music to be played;
   The principle that a magnitude of the current output by the IGBT is affected by its duty cycle and switching frequency is well known to those skilled in the art, and the magnitude of the current output by the IGBT under different duty cycles and under different switching frequencies may be obtained through preliminary experiments;
   Under the same duty cycle of the IGBT, the higher the target tune of the music to be played, the lower the switching frequency of the IGBT corresponding to each note of the music to be played, and the greater the current value output by corresponding IGBT;
   S3: determining the switching frequency of the IGBT corresponding to each note according to the target tune of the music to be played and each note of the music to be played;
   S4: determining a period corresponding to each switching frequency according to a beat duration corresponding to each note of the music to be played;
   S5: during each period, inputting the corresponding switching frequency and preset duty cycle to the IGBT, enabling the IGBT to output current, when a difference between a current value output by the IGBT and the request value of the pulse heating current exceeding the preset range, adjusting the duty cycle through controlling the IGBT, and enabling the current value of the IGBT to gradually approach the request value of the pulse heating current.

In this embodiment, after the pulse heating function of the power battery of a motor controller software is turned on, a timing module of the motor controller software starts to work, outputs a beat signal of the music to be played, and calls the frequency value in the switching frequency with a cycle of one beat. A length of a beat time is t*. From time t0, the motor controller software searches for an initial frequency f0 in the switching frequency map, and controls the switching frequency of the IGBT to f0, which means that a switching period TO=1/f0. During T0, the duty cycle D of the IGBT is controlled according to the request value of the pulse heating current, which means that within the period T0, a duration time of the IGBT's switched-on (connected)time is controlled to T0*D, the IGBT's switched-off(discounted) time is TO*(1- D), and it is kept in this cycle. When the current value output by the IGBT is lower than the request value of the pulse heating current (and the difference between the current value output by the IGBT and the request value of the pulse heating current exceeds the preset range), the IGBT is controlled to increase the duty cycle D, so that the current value output by the IGBT gradually increase close to the request value of the pulse heating current. When the current value output by the IGBT is higher than the request value of the pulse heating current (and the difference between the current value output by the IGBT and the request value of the pulse heating current exceeds the preset range), the IGBT is controlled to reduce the duty cycle D, so that the current value output by the IGBT is controlled to be close to the request value of the pulse heating current, which keeps an effective current value output by the IGBT under different switching frequencies being basically consistent, and does not affect a heating effect of the power battery. At time t0+t*, the motor controller software searches for a second switching frequency or the pause symbol in the switching frequency map, and repeats the above control when the second effective switching frequency is found. When a stop symbol is detected, an IGBT shutdown command is executed, the switch is turned off, no current passes through it, and no sound is generated at this beat. As time progresses in this way, a function of playing music sequences while heating the power battery is realized.

For a group of the three-phase IGBT of the alternative current motor, a playing principle is the same as that of a single IGBT. At the same time, all IGBTs work at the same switching frequency to produce a tune with the same fundamental frequency, and the duty cycle of the IGBT is only adjusted according to the request value of the pulse heating current.

The disclosure further provides a sound controlling device of pulse heating for the power battery, including:
an acquisition module, configured to obtain the request value of the pulse heating current and the music to be played when turning on the pulse heating function of the power battery for the power battery;
a first determination module, configured to determine the target tune corresponding to the music to be played according to the request value of the pulse heating current;
a second determination module, configured to determine the switching frequency of the IGBT corresponding to each note according to the target tune of the music to be played and each note of the music to be played;
an adjustment module, configured to input the corresponding switching frequency and preset duty cycle to the IGBT during each period, enable the IGBT to output current, adjust the duty cycle through controlling the IGBT, and enable the current value of the IGBT to gradually approach the request value of the pulse heating current when a difference between a current value output by the IGBT and the request value of the pulse heating current exceeding a preset range.

The disclosure further provides an electric vehicle, including the sound controlling device of pulse heating for the power battery.

## Claims

1. A sound controlling method of pulse heating for a power battery, comprising:
obtaining a request value of a pulse heating current and a music to be played when turning on a pulse heating function of the power battery;
**characterized by** further comprising:
determining a target tune corresponding to the music to be played according to the request value of the pulse heating current;
determining a switching frequency of an IGBT corresponding to each note according to the target tune of the music to be played and each note of the music to be played;
determining a period corresponding to each switching frequency according to a beat duration corresponding to each note of the music to be played;
during each period, inputting a corresponding switching frequency and preset duty cycle to the IGBT, enabling the IGBT to output current, when a difference between a current value output by the IGBT and the request value of the pulse heating current exceeding a preset range, adjusting the duty cycle through controlling the IGBT, and enabling the current value of the IGBT to gradually approach the request value of the pulse heating current.

2. The sound controlling method of pulse heating for the power battery according to claim 1, wherein
the music to be played is randomly selected from a plurality of preset music or actively selected by a driver from the plurality of preset music.

3. The sound controlling method of pulse heating for the power battery according to claim 1, wherein
through a pre-stored switching frequency map, the switching frequency of the IGBT corresponding to each note is obtained from the switching frequency map;
multiple sets of data are recorded in the switching frequency map, and each set of data comprises: a name of a piece of music, a tune of a piece of music, each note of a piece of music, and the switching frequency of the IGBT corresponding to each note.

4. The sound controlling method of pulse heating for the power battery according to claim 3, wherein
determining the target tune corresponding to the music to be played according to the request value of the pulse heating current comprises:
through the switching frequency map, looking up and obtaining multiple sets of values of the switch frequency under different tunes in the music to be played, a set of the values of the switching frequency comprising a maximum value of the switching frequency and a minimum value of the switching frequency under a tune;
when the duty cycle of the IGBT is 100%, determining each set of the values of the switching frequency corresponding to each group of current values, each group of the current values comprising a maximum current value and a minimum current value under a tune;
determining one group of the current values as a group of the target current values when that a difference between the maximum current value and the request value of the pulse heating current is within the preset range and a difference between the minimum current value and the request value of the pulse heating current is within the preset range, and determining a tune corresponding to the group of the target current values as the target tune of the music to be played.

5. A sound controlling device of pulse heating for a power battery, comprising:
an acquisition module, configured to obtain the request value of the pulse heating current and the music to be played when turning on the pulse heating function of the power battery for the power battery;
**characterized by** further comprising:
a first determination module, configured to determine a target tune corresponding to the music to be played according to the request value of the pulse heating current;
a second determination module, configured to determine a switching frequency of an IGBT corresponding to each note according to the target tune of the music to be played and each note of the music to be played;
a third determination module, configured to determine a period corresponding to each switching frequency according to a beat duration corresponding to each note of the music to be played;
an adjustment module, configured to input a corresponding switching frequency and preset duty cycle to the IGBT during each period, enable the IGBT to output current,
adjust the duty cycle through controlling the IGBT, and enable the current value of the IGBT to gradually approach the request value of the pulse heating current when a difference between a current value output by the IGBT and the request value of the pulse heating current exceeding a preset range.

6. An electric vehicle, comprising:
the sound controlling device of pulse heating for the power battery according to claim 5.

## Patentansprüche

1. Akustisches Steuerungsverfahren für ein Impulserheizen einer Leistungsbatterie, umfassend: Erhalten eines Anforderungswertes eines Impulsheizstroms und einer abzuspielenden Musik, wenn eine Impulsheizfunktion der Leistungsbatterie eingeschaltet wird; **dadurch gekennzeichnet, dass** es ferner umfasst:
Bestimmen einer der abzuspielenden Musik entsprechenden Zielmelodie gemäß dem Anforderungswert des Impulsheizstrom;
Bestimmen einer jedem Ton entsprechenden Schaltfrequenz eines IGBT gemäß der Zielmelodie der abzuspielenden Musik und jedem Ton der abzuspielenden Musik; Bestimmen einer jeder Schaltfrequenz entsprechenden Periode gemäß einer jedem Ton der abzuspielenden Musik entsprechenden Taktdauer;
während jeder Periode, Eingeben einer entsprechenden Schaltfrequenz und eines voreingestellten Tastverhältnisses in den IGBT, so dass der IGBT einen Strom ausgibt, und, wenn eine Differenz zwischen einem vom IGBT ausgegebenen Stromwert und dem Anforderungswert des Impulsheizstroms einen voreingestellten Bereich überschreitet, Einstellen des Tastverhältnisses durch Steuern des IGBT, so dass sich der Stromwert des IGBT allmählich an den Anforderungswert des Impulsheizstroms annähert.

2. Akustisches Steuerungsverfahren für ein Impulserheizen einer Leistungsbatterie nach Anspruch 1, wobei die abzuspielende Musik zufällig aus einer Vielzahl voreingestellter Musik ausgewählt oder aktiv vom Fahrer aus der Vielzahl voreingestellter Musik ausgewählt wird.

3. Akustisches Steuerungsverfahren für ein Impulserheizen einer Leistungsbatterie nach Anspruch 1, wobei mittels einer vorab gespeicherten Schaltfrequenzkarte die jedem Ton entsprechende Schaltfrequenz des IGBT aus der Schaltfrequenzkarte erhalten wird;
mehrere Datensätze in der Schaltfrequenzkarte aufgezeichnet werden, und jeder Datensatz umfasst: einen Namen eines Musikstücks, eine Melodie eines Musikstücks, jeder Ton eines Musikstücks und die jedem Ton entsprechende Schaltfrequenz des IGBT.

4. Akustisches Steuerungsverfahren für ein Impulserheizen einer Leistungsbatterie nach Anspruch 3, wobei Bestimmen der der abzuspielenden Musik entsprechenden Zielmelodie gemäß dem Anforderungswert des Impulsheizstroms umfasst:
mittels der Schaltfrequenzkarte Nachschlagen und Erhalten mehrerer Wertesätze der Schaltfrequenz unter verschiedenen Melodie in der abzuspielenden Musik, wobei ein Wertesatz der Schaltfrequenz einen Maximalwert der Schaltfrequenz und einen Minimalwert der Schaltfrequenz unter einer Melodie umfasst;
wenn das Tastverhältnis des IGBT 100 % beträgt, Bestimmen von jedem Wertesatz der Schaltfrequenz, der jeder Gruppe von Stromwerten entspricht, wobei jede Gruppe von Stromwerten einen Maximalstromwert und einen Minimalstromwert unter einer Melodie umfasst;
Bestimmen einer Gruppe der Stromwerte als eine Gruppe der Zielstromwerte, wenn eine Differenz zwischen dem maximalen Stromwert und dem Anforderungswert des Impulsheizstroms innerhalb des voreingestellten Bereichs liegt und eine Differenz zwischen dem minimalen Stromwert und dem Anforderungswert des Impulsheizstroms innerhalb des voreingestellten Bereichs liegt, und Bestimmen einer der Gruppe der Zielstromwerte entsprechenden Melodie als Zielmelodie der abzuspielenden Musik.

5. Akustische Steuerungsvorrichtung für ein Impulserheizen einer Leistungsbatterie, umfassend:
ein Erfassungsmodul, das dazu konfiguriert ist, den Anforderungswert des Impulsheizstroms und die abzuspielende Musik beim Einschalten der Impulsheizfunktion der Leistungsbatterie für die Leistungsbatterie zu erhalten; **gekennzeichnet dadurch, dass** es ferner umfasst:
ein erstes Bestimmungsmodul, das dazu konfiguriert ist, eine der abzuspielenden Musik entsprechende Zielmelodie gemäß dem Anforderungswert des Impulsheizstroms zu bestimmen;
ein zweites Bestimmungsmodul, das dazu konfiguriert ist, eine jedem Ton entsprechende Schaltfrequenz eines IGBT gemäß der Zielmelodie der abzuspielenden Musik und jedem Ton der abzuspielenden Musik zu bestimmen;
ein drittes Bestimmungsmodul, das dazu konfiguriert ist, eine jedem Schaltfrequenz entsprechende Periode gemäß einer jedem Ton der abzuspielenden Musik entsprechenden Taktdauer zu bestimmen;
ein Einstellmodul, das dazu konfiguriert ist, während jeder Periode eine entsprechende Schaltfrequenz und ein voreingestelltes Tastverhältnis an den IGBT einzugeben, um den IGBT in die Lage zu versetzen, Strom auszugeben,
und das Tastverhältnis durch Steuern des IGBT einzustellen und den Stromwert des IGBT allmählich an den Anforderungswert des Impulsheizstroms anzunähern, wenn eine Differenz zwischen einem vom IGBT ausgegebenen Stromwert und dem Anforderungswert des Impulsheizstroms einen voreingestellten Bereich überschreitet.

6. Elektrofahrzeug, umfassend:
die akustische Steuerungsvorrichtung für ein Impulserheizen einer Leistungsbatterie nach Anspruch 5.

## Revendications

1. Une méthode de contrôle sonore de chauffage par impulsions pour une batterie de puissance, comprenant :
l'obtention d'une valeur de demande de courant de chauffage par impulsions et d'une musique à jouer lors de l'activation de la fonction de chauffage par impulsions de la batterie de puissance ; **caractérisée en ce qu'**elle comprend en outre :
la détermination d'une mélodie cible correspondant à la musique à jouer selon la valeur de demande de courant de chauffage par impulsions ;
la détermination d'une fréquence de commutation d'un IGBT correspondant à chaque note selon la mélodie cible de la musique à jouer et chaque note de la musique à jouer ;
la détermination d'une période correspondant à chaque fréquence de commutation selon une durée de battement correspondant à chaque note de la musique à jouer ;
pendant chaque période, appliquer une fréquence de commutation correspondante et un rapport cyclique prédéfini à l'IGBT, permettant à l'IGBT de délivrer du courant ; lorsque la différence entre la valeur de courant délivrée par l'IGBT et la valeur de demande de courant de chauffage par impulsions dépasse une plage prédéfinie, ajuster le rapport cyclique en contrôlant l'IGBT, et permettre à la valeur de courant de l'IGBT d'approcher progressivement la valeur de demande de courant de chauffage par impulsions.

2. La méthode de contrôle sonore de chauffage par impulsions pour la batterie de puissance selon la revendication 1, dans laquelle
la musique à jouer est sélectionnée aléatoirement parmi une pluralité de musiques prédéfinies ou activement par un conducteur parmi la pluralité de musiques prédéfinies.

3. La méthode de contrôle sonore de chauffage par impulsions pour la batterie de puissance selon la revendication 1, dans laquelle
au moyen d'une carte de fréquences de commutation pré-enregistrée, la fréquence de commutation de l'IGBT correspondant à chaque note est obtenue à partir de la carte de fréquences de commutation ;
plusieurs ensembles de données sont enregistrés dans la carte de fréquences de commutation, et chaque ensemble de données comprend : un nom de morceau de musique, une mélodie de morceau de musique, chaque note de morceau de musique et la fréquence de commutation de l'IGBT correspondant à chaque note.

4. La méthode de contrôle sonore de chauffage par impulsions pour la batterie de puissance selon la revendication 3, dans laquelle
la détermination de la mélodie cible correspondant à la musique à jouer selon la valeur de demande de courant de chauffage par impulsions comprend :
au moyen de la carte de fréquences de commutation, rechercher et obtenir plusieurs ensembles de valeurs de fréquence de commutation sous différentes mélodies dans la musique à jouer, un ensemble de valeurs de fréquence de commutation comprenant une valeur maximale de fréquence de commutation et une valeur minimale de fréquence de commutation sous une mélodie ;
lorsque le rapport cyclique de l'IGBT est de 100 %, déterminer chaque ensemble de valeurs de fréquence de commutation correspondant à chaque groupe de valeurs de courant, chaque groupe de valeurs de courant comprenant une valeur de courant maximale et une valeur de courant minimale sous une mélodie ;
déterminer un groupe de valeurs de courant comme groupe de valeurs de courant cible lorsque la différence entre la valeur de courant maximale et la valeur de demande de courant de chauffage par impulsions est dans la plage prédéfinie et que la différence entre la valeur de courant minimale et la valeur de demande de courant de chauffage par impulsions est dans la plage prédéfinie, et déterminer une mélodie correspondant au groupe de valeurs de courant cible comme la mélodie cible de la musique à jouer.

5. Un dispositif de contrôle sonore de chauffage par impulsions pour une batterie de puissance, comprenant :
un module d'acquisition, configuré pour obtenir la valeur de demande de courant de chauffage par impulsions et la musique à jouer lors de l'activation de la fonction de chauffage par impulsions de la batterie de puissance ; **caractérisée en ce qu'**elle comprend en outre :
un premier module de détermination, configuré pour déterminer une mélodie cible correspondant à la musique à jouer selon la valeur de demande de courant de chauffage par impulsions ;
un deuxième module de détermination, configuré pour déterminer une fréquence de commutation d'un IGBT correspondant à chaque note selon la mélodie cible de la musique à jouer et chaque note de la musique à jouer ;
un troisième module de détermination, configuré pour déterminer une période correspondant à chaque fréquence de commutation selon une durée de battement correspondant à chaque note de la musique à jouer ;
un module d'ajustement, configuré pour appliquer une fréquence de commutation correspondante et un rapport cyclique prédéfini à l'IGBT pendant chaque période, permettre à l'IGBT de délivrer du courant,
ajuster le rapport cyclique en contrôlant l'IGBT, et permettre à la valeur de courant de l'IGBT d'approcher progressivement la valeur de demande de courant de chauffage par impulsions lorsque la différence entre la valeur de courant délivrée par l'IGBT et la valeur de demande de courant de chauffage par impulsions dépasse une plage prédéfinie.

6. Un véhicule électrique, comprenant :
le dispositif de contrôle sonore de chauffage par impulsions pour la batterie de puissance selon la revendication 5.
